# EUROPEAN PATENT SPECIFICATION

(11) **EP 4 237 941 B1**
(45) Date of publication and mention of the grant of the patent: **25.06.2025**
(21) Application number: 21758895.3
(22) Date of filing: 30.07.2021
(51) Int. Cl.: G06F 9/455, G06F 16/10, G06F 16/16, G06F 16/11, G06F 3/06, G06F 16/188

(54) **MERGING COMPOSITE IMAGES INTO A NEW FILESYSTEM NAMESPACE**
ZUSAMMENFÜHRUNG ZUSAMMENGESETZTER BILDER IN EINEN NEUEN DATEISYSTEMNAMENSRAUM
FUSION D'IMAGES COMPOSITES DANS UN NOUVEL ESPACE DE NOMS DE SYSTÈME DE FICHIERS

(30) Priority: 29.10.2020 US 202017084238
(43) Date of publication of application: 06.09.2023
(73) Proprietor: Microsoft Technology Licensing, LLC, Redmond, Washington 98052 (US)
(72) Inventor: CHAGANI, Shaheed Gulamabbas, Redmond, Washington 98052-6399 (US); BRENDER, Scott Alan, Redmond, Washington 98052-6399 (US)
(74) Representative: Grünecker Patent- und Rechtsanwälte PartG mbB
(86) International application number: PCT/US2021/043812
(87) International publication number: WO 2022/093348

(56) References cited:
- WO-A1-2011/022388
- US-A1- 2016 072 889
- US-A1- 2018 129 666

## Description

### TECHNICAL FIELD

The present invention relates to the field of filesystems.

### BACKGROUND

It is common for modem computer systems to operate different privilege contexts using containerization technologies. In general, containerization refers to the ability of a computer system to provide guest contexts (or partitions) in which one or more processes or even an entire operating system (OS) run in relative isolation. For instance, OS-level virtualization technologies refer to containerization in which guest contexts are isolated user space instances created by a host OS kernel, and in which user-space processes can run on top of that kernel in isolation from other guest contexts created by the same kernel. Examples of OS-level virtualization technologies include containers (DOCKER), Zones (SOLARIS), and jails (FREEBSD). Hypervisor-based virtualization technologies refer to containerization in which guest contexts are virtual hardware machines created by a host OS that includes a hypervisor, and in which an entire additional OS can run in isolation from other virtual machines. Examples of hypervisor-based virtualization technologies include HYPER-V (MICROSOFT), XEN (LINUX), VMWARE, VIRTUALBOX (ORACLE), and BHYVE (FREEBSD).

Regardless of the containerization technology used, a guest context generally needs access to a filesystem namespace, such as a filesystem namespace comprising files for an operating system, for applications, and the like. As such, various disk and/or filesystem "image" formats are employed by various containerization technologies, each with their own benefits and drawbacks.

US 2018/129666 A1 relates to multi-layer merge in a storage virtualization system. The state of a file may be a combination of local state, typically small (e.g., a placeholder file), and some external source state such as that maintained in a read-only namespace managed by a cloud provider or by another local file system, typically large. A file system component is provided for overlaying (i.e., merging) the partial local state and the external source state into a single file system view that can be used by an application of a container as if the full state exists locally. Overlays that comprise the file system state may be referred to as "layers". A tombstone mechanism may be provided to record delete or rename modifications in the top layer.

WO 2011/022388 A1 relates to a virtual workspace that can include an active instance of a layered virtual file system namespace. A layered virtual file system namespace is referred to by the virtual workspace and includes a collection of system data (e.g. layered virtual file system base layer), user data (e.g. layered virtual file system user layer), and virtualized applications (e.g. virtual app layer), metadata and policies (e.g. layered virtual file system layer scope). Because a virtual workspace can include software such as an operating system and one or more applications in addition to user data, a virtual workspace can be aligned with a namespace so that an operating system of the virtual workspace may be located at a "base layer", one or more applications executing on the operating system may be located at an upper "virtual app" layer, and user data in a virtual workspace may be found at any layer at or above the user layer.

US 2016/072889 A1 relates to techniques for maintaining global name consistency for a distributed filesystem. Two or more cloud controllers collectively manage distributed filesystem data that is stored in one or more cloud storage systems; the cloud controllers ensure data consistency for the stored data, and each cloud controller caches portions of the distributed filesystem. During operation, a cloud controller receives a client request to perform a namespace operation upon a filesystem object. The cloud controller contacts the cloud controller that manages ("owns") the portion of the global namespace for the distributed filesystem that includes the filesystem object. This second cloud controller ensures the consistency of the filesystem object across the distributed filesystem during the namespace operation.

### BRIEF SUMMARY

It is the object of the present invention to provide a method and system for merging a plurality of composite images into a merged filesystem namespace.

This object is solved by the subject matter of the independent claims.

Preferred embodiments are defined in the dependent claims.

One image format used in connection with containerization technologies is the Composite IMage (CIM) format. A CIM comprises two primary types of data: (i) a metadata portion which defines a filesystem namespace (including, for example, a hierarchy of folders and files, file attributes, and the like), and (ii) a data portion which stores the actual data for files within the defined filesystem namespace. The CIM format is designed to facilitate efficient deployment to a given guest context. For example, the data portion of a CIM comprises a data blob encompassing the data for all the files defined by the metadata portion. When deploying a CIM to a guest context this data blob can be extracted to destination storage as if it were a single file, rather than multiple individual files. As one of ordinary skill in the art will recognize, writing a single large file is less timely and resource intensive than writing a plurality of files that, together, embody the same data as the single large file. A CIM filesystem (CIMFS) uses the metadata portion of the CIM to mount this data blob as a filesystem namespace comprising a plurality of files, potentially arranged into a hierarchy of folders. Presently, if a single system mounts multiple CIMs at once, each of these CIMs are mounted into different (i.e., non-overlapping) filesystem namespaces.

The inventors observed that it would be beneficial to be able to deploy multiple independent CIMs to a single guest context, and to merge those CIMs into a single merged namespace-rather than mounting those CIMs into different namespaces as would be conventional. For example, one CIM could define a filesystem namespace for a base OS, another CIM could define a filesystem namespace comprising files for a language pack, another CIM could define a filesystem namespace comprising files for an application, etc. Thus, when merging these multiple CIMs in a layered manner, a resulting merged namespace includes the base OS, together with a language pack and an application. At least some embodiments described herein merge a plurality of CIMs into a merged filesystem namespace, while handling any namespace conflicts (e.g., conflicting file or directory paths) that arise during the merger.

In embodiments, the merger of CIMs is a metadata-only operation. As such, in these embodiments, a CIM merger process merges the metadata portions of a plurality of CIMS, without copying or otherwise merging corresponding data portions. Instead, in these embodiments the merged metadata references the data portions of the underlying backing CIMs. By merging metadata while referencing underlying data, rather than copying it, the embodiments herein achieve a low-overhead merger process that conserves processing, memory, and data storage resources. For example, if embodiments instead copied relevant data portions into a merged CIM, this copy process would involve data marshalling and data duplication, each of which takes time and computing resources.

In some embodiments, methods, systems, and computer program products are directed to merging a plurality of CIMs into a merged filesystem namespace. These embodiments include accessing merge configuration information. The merge configuration information includes an identity of a plurality of backing CIMs, each comprising at least a metadata portion defining an independent filesystem namespace, and a data portion comprising data for the independent filesystem namespace. The merge configuration information also includes a merge precedence order for the plurality of backing CIMs. These embodiments also include, based on the merge configuration information, generating merged metadata from each metadata portion of the plurality of backing CIMs. The merged metadata defines a merged filesystem namespace comprising two or more filesystem objects from the plurality of backing CIMs. Generating the merged metadata includes generating a first merged metadata item that defines a first filesystem object as being part of the merged filesystem namespace. The first merged metadata item corresponds to a first metadata item within a first metadata portion of a first of the plurality of backing CIMs which defines the first filesystem object as being part of a first independent filesystem namespace. The first merged metadata item references at least a first data portion of the first backing CIM. The first merged metadata item is generated based at least on the first filesystem object having no conflict with any filesystem object from any of the plurality of backing CIMs that are defined by the merge precedence order to have a higher merge precedence than the first backing CIM. Generating the merged metadata includes also generating a second merged metadata item that defines a second filesystem object as being part of the merged filesystem namespace. The second merged metadata item corresponds to a second metadata item within a second metadata portion of a second of the plurality of backing CIMs which defines the second filesystem object as being part of a second independent filesystem namespace. The second merged metadata item references at least a second data portion of the second backing CIM. The second merged metadata item is generated based at least on the second filesystem object having no conflict with any filesystem object from any of the plurality of backing CIMs that are defined by the merge precedence order to have a higher merge precedence than the second backing CIM. These embodiments also include exposing the merged filesystem namespace, including the first filesystem object and the second filesystem object, to at least one filesystem consumer.

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 illustrates an example computer architecture that facilitates merging a plurality of CIMs into a merged filesystem namespace;
Figure 2 illustrates components of a CIM manager that provide functionality for merging a plurality of independent CIMs to generate a new merged filesystem namespace;
Figure 3 illustrates an example of merging a plurality of CIMs into a merged filesystem namespace, and into a merged CIM; and
Figure 4 illustrates a flow chart of an example method for merging a plurality of CIMs into a merged filesystem namespace.

### DETAILED DESCRIPTION

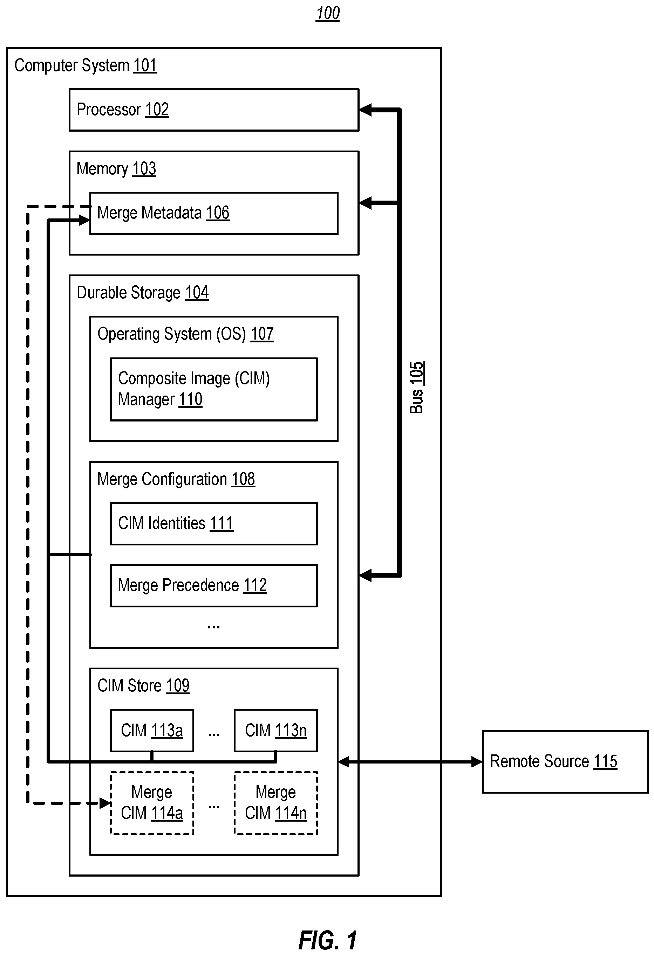

As introduced above, at least some embodiments described herein merge a plurality of CIMs into a merged filesystem namespace, while handling any namespace conflicts (e.g., conflicting file or directory paths) that arise during the merger. To the accomplishment of the foregoing, Figure 1 illustrates an example computer architecture 100 that facilitates merging a plurality of CIMs into a merged filesystem namespace. As shown in Figure 1, computer architecture 100 comprises a computer system 101 that includes at least one processor 102, at least one memory device 103 (memory 103), and at least one durable storage device 104 (durable storage 104), all interconnected by at least one bus 105. As shown, the durable storage 104 stores computer-executable instructions and data structures implementing an OS 107, which operates a CIM manager 110. In embodiments, the CIM manager 110 is integral to the OS 107, while in other embodiments the CIM manager 110 is an external component loaded into the OS 107.

In Figure 1, CIM manager 110 represents computer-executable instructions and data structures for interacting with CIMs. In embodiments, each CIM represents a filesystem namespace in a portable composite structure comprising (i) a metadata portion defining a filesystem namespace, and (ii) a data portion comprising data for the defined filesystem namespace. In embodiments, the metadata portion defines a filesystem namespace using (i) names or identifiers corresponding to one or more filesystem objects within the filesystem namespace-such as folders, files, reparse points, symbolic links, hard links, etc.; (ii) a hierarchical arrangement of filesystem objects; (iii) attributes of filesystem objects-such as security descriptors, Access Control Lists (ACLs), POSIX permissions, etc.; (iv) the identity of multiple data steams for a filesystem objects, and the like. In embodiments, the data portion stores the actual data stream(s) for files defined by the metadata portion. In some embodiments, the data portion sequentially stores these data streams within a single file or data blob, which facilitates quick and efficient extraction into a guest context.

In some embodiments, the CIM manager 110 provides a variety of CIM-related functions, such as to create new CIMs, to modify existing CIMs, to operate as a filesystem driver (i.e., for mounting CIM(s) into corresponding filesystem namespace(s) for consumption by the OS and/or application(s) executing thereon), and the like. Regardless of what other functions the CIM manager 110 may provide, in accordance with the embodiments herein the CIM manager 110 represents at least functionality for merging a plurality of independent CIMs to generate a new merged filesystem namespace from a plurality of independent filesystem namespaces represented by the merged CIMs. Within the context of the present disclosure, a CIM is considered to be "independent" when it can be mounted without a dependency on any other CIM; correspondingly, the filesystem namespace defined by an "independent" CIM is, itself, an independent filesystem namespace that is mountable and operable without a dependency on any other filesystem namespace.

In embodiments, the CIM manager 110 operates based on a merge configuration 108 and CIMs stored in a CIM store 109. In Figure 1, the merge configuration 108 and the CIM store 109 are illustrated as residing on the durable storage 104. However, in some embodiments, one or both of the merge configuration 108 or the CIM store 109 reside, at least partially, in memory 103. As illustrated, in some embodiments computer architecture 100 includes at least one remote source 115, and one more CIMs located in the CIM store 109 are obtained from, or are sent to, this remote source 115.

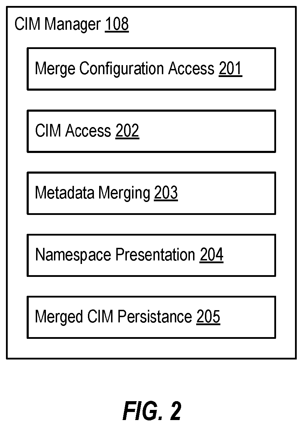

Example operation of the CIM manager 110 is now described in further reference to Figure 2, which details example components that provide functionality for merging a plurality of independent CIMs to generate a new merged filesystem namespace. As illustrated, the CIM manager 110 comprises a variety of components (merge configuration access component 201, CIM access component 202, metadata merging component 203, namespace presentation component 204, and merged CIM persistence component 205) that represent functions that the CIM manager 110 implements in accordance with various embodiments described herein. It will be appreciated that the depicted components-including their identity, sub-components, and arrangement-are presented merely as an aid in describing various embodiments of the CIM manager 110 described herein, and that these components are non-limiting to how software and/or hardware might implement various embodiments of the CIM manager 110 described herein, or of the particular functionality thereof.

As a general introduction to operation of the components of the CIM manager 110, the merge configuration access component 201 accesses merge configuration information from the merge configuration 108. As shown in Figure 1, the merge configuration information includes CIM identities 111, which comprises an identity of two or more independent CIMs whose corresponding independent namespaces are to be merged into a single merged filesystem namespace. The independent CIMs identified as part of CIM identities 111 are illustrated collectively in Figure 1 as CIMs 113 (i.e., CIM 113a to CIM 113n). As shown in Figure 1, the merge configuration information also includes a merge precedence 112, which is a precedence order among the CIMs 113 that are identified as part of CIM identities 111. In embodiments, the merge precedence 112 defines an absolute precedence order among the CIMs 113 that are to be merged-such that there is an overall ordering of CIMs 113, from a first CIM having a highest precedence to an *n*^{th} CIM having a lowest precedence. In embodiments, each filesystem namespace conflict (e.g., collision) between filesystem objects from two or more of CIMs 113 are resolved by selecting a conflicting filesystem object for inclusion in the new merged filesystem namespace that originates from a CIM having a highest precedence among the CIMs from which the conflict arises.

The merge configuration 108 is illustrated with ellipses, indicating that in some embodiments the merge configuration 108 includes one or more additional types of merge configuration information, which are used in combination with the CIM identities 111 and the merge precedence 112. In various embodiments, this additional merge configuration information supplements, or even overrides, the merge precedence 112 in order to provide granular control of what is included in, or excluded from, a new merged filesystem namespace when merging the CIMs identified in the CIM identities 111.

In one or more embodiments, the merge configuration information includes one or more "tombstones." As used herein a tombstone is an indication of one or more filesystem objects that should be excluded from a merged filesystem namespace. Thus, in embodiments, even if a filesystem object matching a tombstone appears in one or more of CIMs 113, that filesystem object is omitted from the merged filesystem namespace. In an example, tombstones are used to conceptually "delete" filesystem objects-such as files and folders-from one or more of CIMs 113 as those CIMs are merged.

In one or more embodiments, the merge configuration information includes one or more include lists, which specify one or more filesystem objects that should appear in a merged filesystem namespace if those filesystem objects are present in one or more of CIMs 113. Thus, in embodiments, filesystem objects that are present in one or more of CIMs 113 are merged into the merged filesystem namespace only if they appear in an include list. In an example, include list(s) are used to specifically identify which filesystem objects are allowed to be merged from CIMs 113 into the merged filesystem namespace, to the exclusion of any other filesystem objects they may appear in CIMs 113.

In one or more embodiments, the merge configuration information includes one or more override rules that override the merge precedence 112. Thus, in embodiments, a filesystem object present in a lower precedence CIM is included in a merged filesystem namespace, even if a conflicting filesystem object present in a higher precedence CIM. In one embodiment, an override rule specifies a filesystem object and specific CIM from which the filesystem object is to be merged without regard to any conflict(s) from higher-precedence CIMs.

As will be appreciated, use of one or more tombstones, include lists, or override rules provides a technical benefit of enabling granular customization of the filesystem objects that appear in a merged filesystem namespace.

In one or more embodiments, the merge configuration information includes one or more conditional rules that specify one or more attributes that should be applied to a filesystem object within the merged filesystem namespace, if that filesystem object is present in one or more of CIMs 113. Thus, in embodiments, if a filesystem object that is the subject of a conditional rule is present in one or more of CIMs, that filesystem object is included in a merged filesystem namespace while overriding one or more attributes of that filesystem object. In an example, a conditional rule specifies that if a particular file exists in at least one of CIMs 113, that file is to have a particular ownership (which may be different than an ownership applied to the file within one or more of CIMs 113) when it is included in the merged filesystem namespace. As will be appreciated, use of conditional rules provides a technical benefit of enabling granular customization of attributes of filesystem objects that appear in a merged filesystem namespace.

Continuing the general introduction to operation of the components of the CIM manager 110, based on the CIM identities 111 in the merge configuration 108, the CIM access component 202 accesses two or more of CIMs 113, and the metadata merging component 203 merges the metadata portions of these CIMs 113 according to the merge precedence 112, together with any other merge configuration information, in order to produce merge metadata 106 in memory 103. This merge metadata 106 defines a new merged filesystem namespace representing a merger of the independent namespaces defined by the CIMs 113. Operation of the metadata merging component 203 is indicated in Figure 1 with a forked arrow, showing CIMs 113 and merge configuration 108 at one end (i.e., as inputs to the metadata merging component 203), and showing merge metadata 106 at the other end (i.e., as outputs from the metadata merging component 203). In embodiments, this merge metadata represents a new merged filesystem namespace, with reference to the data portions of the CIMs 113 backing that merged filesystem namespace. Since the merger is a metadata-only operation the embodiments herein provide a technical benefit of achieving a low-overhead merger process that conserves processing, memory, and data storage resources by avoiding data marshalling and data duplication.

In embodiments, the CIM manager 110 uses the merge metadata 106 to mount and present the new merged filesystem namespace to a filesystem consumer (e.g., OS 107 or an application executing thereon), as represented by the namespace presentation component 204. Thus, in embodiments, the CIM manager 110 makes new merged filesystem namespaces available to filesystem consumers at runtime.

In embodiments, the CIM manager 110 persists the merge metadata 106 to at least one new "metadata only" merge CIM, as represented by the merged CIM persistence component 205. For example, an arrow in Figure 1 links the merge metadata 106 with a merge CIM 114a, indicating operation of the merged CIM persistence component 205. In embodiments, a metadata only merge CIM is a CIM that comprises the merge metadata 106 within a metadata portion (and which defines the new merged filesystem namespace), but lacks any data within a data portion of the merge CIM (or lacks the data portion altogether). Both the arrow and merge CIM 114a are shown in broken lines, indicating that, in some embodiments, persistence of merge metadata 106 to merge CIM 114a is an optional step. Creation of a merge CIM enables a merged filesystem namespace to be mounted repeatedly without requiring re-generation of the merge metadata 106. Additionally, creation of a merge CIM enables a merged filesystem namespace to be shared with other guest contexts and/or computer systems (e.g., remote source 115).

Notably, Figure 1 shows that there may be multiple merge CIMs 114 (i.e., merge CIM 114a to merge CIM 114n). For example, based on applying differing merge precedence (and/or other rules), the CIM manager 110 might use the same group of CIMS 113 to produce different versions the merge metadata 106 (i.e., corresponding to different versions of a merged filesystem namespace), and persist these different versions of the merge metadata 106 to different ones of merge CIMs 114. In another example, the CIM manager 110 might repeat the merge process after one or more of the CIMS 113 has been updated, in order to produce an updated version of a merged filesystem namespace.

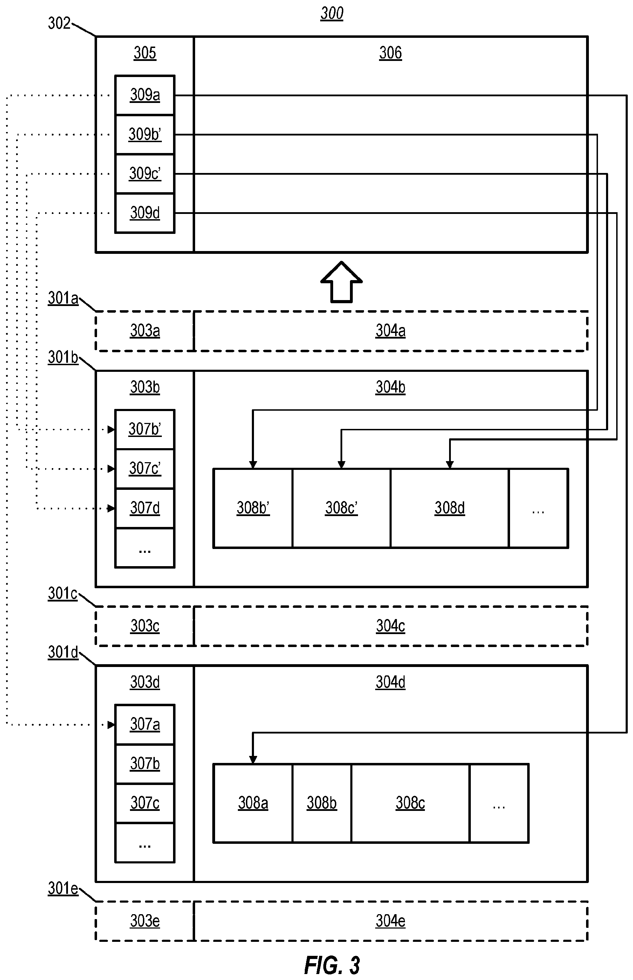

In view of this general introduction to operation of the components of the CIM manager 110, Figure 3 illustrates a detailed example 300 of merging a plurality of CIMs into a merged filesystem namespace, and into a merged CIM. In example 300, a plurality of backing CIMs 301 (i.e., identified by CIM identities 111) are merged to produce a metadata-only merge CIM 302.

In Figure 3, a precedence order (e.g., identified by merge precedence 112) of the backing CIMs 301 is shown based on how the backing CIMs 301 are layered, with the uppermost layer having the highest precedence, and the lowermost layer having the lowest precedence. Figure 3 shows that the backing CIMs 301 comprise at least CIM 301b and CIM 301d (shown in solid lines), with CIM 301b having a higher precedence than CIM 301d. For completeness, however, Figure 3 also includes CIM 301a, CIM 301c, and CIM 301e (shown in broken lines) to demonstrate that that is possible to have one (or more) CIMs above and/or below each of CIM 301b and CIM 301d. For example, in Figure 3, CIM 301a (if present) has a higher precedence than CIM 301b, CIM 301b has a higher precedence than CIM 301c (if present), CIM 301c (if present) has a higher precedence than CIM 301d, and CIM 301d has a higher precedence than CIM 301e (if present).

Each of backing CIMs 301 includes a corresponding metadata portion 303 (i.e., metadata portion 303a to metadata portion 303e) and a corresponding data portion 304 (i.e., data portion 304a to data portion 304e). For each backing CIM 301, the metadata portion 303 defines a corresponding independent filesystem namespace for the backing CIM 301, and the data portion 304 stores corresponding data streams for files defined in that filesystem namespace.

For the remainder of the discussion of example 300, it is assumed that only CIM 301b and CIM 301d are present within the backing CIMs 301. In example 300, CIM 301d comprises a metadata portion 303d defining metadata item 307a, metadata item 307b, and metadata item 307c for corresponding filesystem objects (e.g., files), and a data portion 304d storing data for those filesystem objects (e.g., data stream 308a for a file defined by metadata item 307a, data stream 308b for a file defined by metadata item 307b, and data stream 308c for a file defined by metadata item 307c). Additionally, CIM 301b (which has a higher precedence than CIM 301d) comprises a metadata portion 303b defining metadata item 307b', metadata item 307c', and metadata item 307d for corresponding filesystem objects (e.g., files), and a data portion 304b storing data for those filesystem objects (e.g., data stream 308b' for a file defined by metadata item 307b', data stream 308c' for a file defined by metadata item 307c', and data stream 308d for a file defined by metadata item 307d).

In example 300, there are namespace conflicts between a first filesystem namespace defined by CIM 301b and a second filesystem namespace defined by CIM 301d. In particular, metadata item 307b' in CIM 301b has a namespace conflict with metadata item 307b in CIM 301d, and metadata item 307c' in CIM 301b has a namespace conflict with metadata item 307c in CIM 301d. In one example, metadata item 307b' defines a first file within the first filesystem namespace as having a particular name and path, and metadata item 307b defines a second file within the second filesystem namespace as having that same particular name and path-resulting in a namespace conflict. Notably, while their names and paths match, these files need not be identical in CIM 301b and CIM 301d. For example, data stream 308b' within CIM 301b is illustrated as having a larger size than data stream 308b within CIM 301d, and metadata item 307b' within CIM 301b could define different file attributes than metadata item 307b within CIM 301d. Similarly, metadata item 307c' within CIM 301b and metadata item 307c within CIM 301d also define respective files that conflict across the first and second filesystem namespaces.

In example 300, merge CIM 302 represents a merger of the metadata portion 303b of CIM 301b and the metadata portion 303e of CIM 301d (e.g., based on operation of the metadata merging component 203). In particular, a metadata portion 305 of merge CIM 302 includes metadata item 309a, metadata item 309b', metadata item 309c', and metadata item 309d, and the merged filesystem namespace represented by this metadata includes the filesystem objects represented by metadata item 309a, metadata item 309b', metadata item 309c', and metadata item 309d. The sources of these metadata items are indicated with broken arrows, showing that metadata item 309a was merged from CIM 301d and corresponds to metadata item 307a (i.e., since there was no conflicting filesystem object in CIM 301d), that metadata item 309b' was merged from CIM 301b and corresponds to metadata item 307b' (i.e., since CIM 301b takes precedence over CIM 301d, and there was no higher precedence conflicting filesystem object), that metadata item 309c' was merged from CIM 301b and corresponds to metadata item 307c' (i.e., since CIM 301b takes precedence over CIM 301d, and there was no higher precedence conflicting filesystem object), and that metadata item 309d was merged from CIM 301b and corresponds to metadata item 307d (i.e., since there was no higher precedence conflicting filesystem object).

In some embodiments, one or more of the metadata items in metadata portion 305 are copies of the respective metadata items in the backing CIMs. Additionally, or alternatively, in some embodiments, one or more of the metadata items in metadata portion 305 are derivatives of the respective metadata items in the backing CIMs (i.e., not identical to the metadata items in the backing CIMs, but representing substantially the same data). Additionally, or alternatively, in some embodiments, one or more of the metadata items are pointers or references to the respective metadata items in the backing CIMs (i.e., lacking the metadata itself, but pointing to the appropriate metadata in the backing CIMs).

While merge CIM 302 is shown as including an optional data portion 306, it is noted that this data portion 306 is empty in example 300. Instead, example 300 shows that the metadata items in metadata portion 305 refer to the appropriate data streams in the backing CIMs 301. For example, solid arrows show that metadata item 309a refers to data stream 308a within CIM 301d, that metadata item 309b' refers to data stream 308b' within CIM 301b, that metadata item 309c' refers to data stream 308c' within CIM 301b, and that metadata item 309d refers to data stream 308d within CIM 301b.

The following discussion now refers to a number of methods and method acts. Although the method acts may be discussed in certain orders, or may be illustrated in a flow chart as occurring in a particular order, no particular ordering is required unless specifically stated, or required because an act is dependent on another act being completed prior to the act being performed.

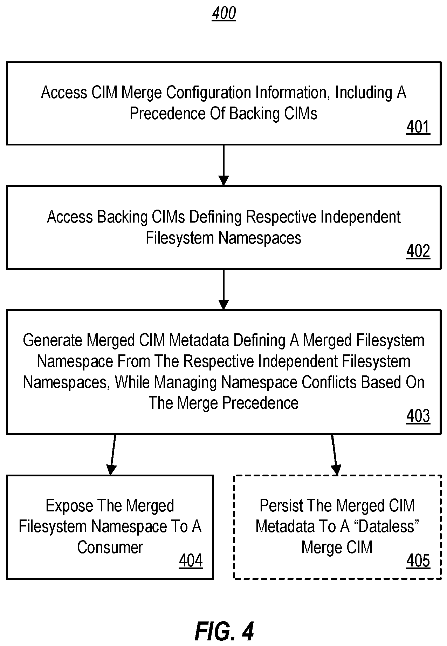

Figure 4 illustrates a flow chart of an example method 400 for merging a plurality of CIMs into a merged filesystem namespace. Method 400 will be described with respect to the components and data of computer architecture 100.

Method 400 comprises an act 401 of accessing CIM merge configuration information, including a precedence of backing CIMs. In some embodiments, act 401 comprises accessing merge configuration information, which includes at least an identity of a plurality of backing CIMs. Each backing CIM comprises at least a metadata portion defining an independent filesystem namespace, and a data portion comprising data for the independent filesystem namespace. In an example, the merge configuration access component 201 accesses merge configuration 108. As shown in Figure 1, the merge configuration 108 comprises CIM identities 111, identifying plurality of independent backing CIMs-such as CIMs 113. In reference to Figure 3, these CIMs 113 could comprise at least CIM 301b and CIM 301d. As discussed, an independent CIM can be mounted without a dependency on any other CIM, and thus defines an independent filesystem namespace.

In act 401, the merge configuration information also includes a merge precedence order for the plurality of backing CIMs. As also shown in Figure 1, the merge configuration 108 also comprises merge precedence 112, which defines an absolute precedence order among the CIMs (identified in CIM identities 111) that are to be merged. Notably, because each of the CIMs identified in the CIM identities 111 is independent, these CIMs could be arranged (or re-arranged, if the merge process is completed multiple times) in any merge precedence order. In Figure 3, for instance, the merge precedence 112 defines CIM 301b to have a higher precedence than CIM 301d.

Method 400 also comprises an act 402 of accessing backing CIMs defining respective independent filesystem namespaces. In some embodiments, act 402 comprises accessing the plurality of backing CIMs identified in the merge configuration information. In an example, based on the merge configuration access component 201 having accessed the CIM identities 111 (e.g., identifying CIMs 113), the CIM access component 202 accesses CIMs 113 from the CIM store 109. Within the context of Figure 3, the CIM access component 202 accesses at least CIM 301b and CIM 301d.

Method 400 also comprises an act 403 of generating merged CIM metadata defining a merged filesystem namespace from the respective independent filesystem namespaces, while managing namespace conflicts based on the merge precedence. In some embodiments, act 403 comprises, based on the merge configuration information, generating merged metadata from each metadata portion of the plurality of backing CIMs, the merged metadata defining a merged filesystem namespace comprising two or more filesystem objects from the plurality of backing CIMs. In an example, the metadata merging component 203 merges two or more of CIMs 113 based on the merge configuration 108, in order to generate merge metadata 106. Within the context of Figure 3, the metadata merging component 203 generates the metadata items (i.e., merge metadata 106) that are eventually persisted (e.g., in act 405) to the metadata portion 305 of merge CIM 302.

As discussed, the merged metadata defines a merged filesystem namespace comprising two or more filesystem objects from the plurality of backing CIMs. Thus, in embodiments, generating the merged metadata in act 403 comprises generating at least (i) a first merged metadata item that defines a first filesystem object as being part of the merged filesystem namespace, and (ii) a second merged metadata item that defines a second filesystem object as being part of the merged filesystem namespace. In embodiments, the first merged metadata item corresponds to a first metadata item within a first metadata portion of a first of the plurality of backing CIMs which defines the first filesystem object as being part of a first independent filesystem namespace. In embodiments, the second merged metadata item corresponds to a second metadata item within a second metadata portion of a second of the plurality of backing CIMs which defines the second filesystem object as being part of a second independent filesystem namespace. In an example, and in reference to Figure 3, the metadata portion 305 of merge CIM 302 includes metadata item 309a, which defines a first filesystem object as being part of a merged namespace. This first filesystem object is defined by metadata item 307a within CIM 301d as being part of a first filesystem namespace defined by CIM 301d. The metadata portion 305 of the merge CIM 302 also includes metadata item 309b', which defines a second filesystem object as being part of the merged namespace. The second filesystem object is defined by metadata item 307b' within CIM 301b as being part of a second filesystem namespace defined by CIM 301b.

In some embodiments of method 400, at least one merged metadata item (e.g., metadata item 309a and/or metadata item 309n') is a copy of a respective metadata item in a backing CIM (e.g., metadata item 307a and/or metadata item 307n'). Thus, in some embodiments, the first merged metadata item is a copy of the first metadata item, or the second merged metadata item is a copy of the second metadata item. In some embodiments of method 400, at least one merged metadata item (e.g., metadata item 309a and/or metadata item 309n') is derived from a respective metadata item in a backing CIM (e.g., metadata item 307a and/or metadata item 307n'). Thus, in some embodiments, the first merged metadata item is a derivative of the first metadata item, or the second merged metadata item is a derivative of the second metadata item. In some embodiments of method 400, at least one merged metadata item (e.g., metadata item 309a and/or metadata item 309n') is a reference to a respective metadata item in a backing CIM (e.g., metadata item 307a and/or metadata item 307n'). Thus, in some embodiments, the first merged metadata item is a reference to the first metadata item within the first metadata portion of the first backing CIM, or the second merged metadata item is a reference to the second metadata item within the second metadata portion of the second backing CIM. In embodiments, any combination of the foregoing is possible.

As discussed, in embodiments, the merging of CIMs is a metadata-only operation. As such, metadata items in the merged metadata generated in act 403 reference data streams in the underlying backing CIMs. Thus, in embodiments, the first merged metadata item references at least a first data portion of the first backing CIM, the second merged metadata item references at least a second data portion of the second backing CIM. For example, as shown in Figure 3, metadata item 309a in the metadata portion 305 of the merge CIM 302 references data stream 308a in CIM 301d, and metadata item 309b' in the metadata portion 305 of the merge CIM 302 references data stream 308b' in CIM 301b. As mentioned, since the merger is a metadata-only operation the embodiments herein provide a technical benefit of achieving a low-overhead merger process that conserves processing, memory, and data storage resources by avoiding data marshalling and data duplication.

Since the metadata merging component 203 merges CIM 301b and CIM 301d based on the merge configuration 108, it does so according to the merge precedence 112 (unless there is any other overriding rule). As such, in embodiments each filesystem object included in the merged filesystem namespace originates from the highest precedence backing CIM that defined that filesystem object, unless there is an overriding rule covering that filesystem object. Stated differently, if there are filesystem objects that have a namespace conflict across backing CIMs, the merged filesystem namespace includes the highest priority filesystem object, unless there is an overriding rule covering that filesystem object. Thus, in embodiments, the first merged metadata item is generated based at least on the first filesystem object having no conflict with any filesystem object from any of the plurality of backing CIMs that are defined by the merge precedence order to have a higher merge precedence than the first backing CIM. In an example, the filesystem object defined by metadata item 309a originated from metadata item 307a, which had no namespace conflict with filesystem object(s) in any higher merge precedence CIM (i.e., since none of CIMs 301a-301c defined a conflicting filesystem object). However, metadata item 307a is permitted to have namespace conflict(s) with filesystem object(s) in lower merge precedence CIMs and still be included in the merged filesystem namespace. Thus, in some embodiments, the first filesystem object conflicts with at least one filesystem object from at least one of the plurality of backing CIMs that is defined by the merge precedence order to have a lower merge precedence than the first backing CIM.

Additionally, in embodiments, the second merged metadata item is generated based at least on the second filesystem object having no conflict with any filesystem object from any of the plurality of backing CIMs that are defined by the merge precedence order to have a higher merge precedence than the second backing CIM. In an example, the filesystem object defined by metadata item 309b' originated from metadata item 307b', which had no namespace conflict with filesystem object(s) in any higher merge precedence CIM (i.e., since CIM 301a, if present, lacked a conflicting filesystem object). However, metadata item 307b' is permitted to have namespace conflict(s) with filesystem object(s) in lower merge precedence CIMs and still be included in the merged filesystem namespace. Thus, in some embodiments, the second filesystem object conflicts with at least one filesystem object from at least one of the plurality of backing CIMs that is defined by the merge precedence order to have a lower merge precedence than the second backing CIM. Notably, this is the case in Figure 3, in which metadata item 307b' conflicts with metadata item 307b in lower precedence CIM 301d.

In some embodiments, either the first backing CIM or the second backing CIM is defined to have the highest merge precedence. As such, in embodiments, the merge precedence order defines the first backing CIM as having a highest merge precedence, or the merge precedence order defines the second backing CIM as having a highest merge precedence. In other embodiments, at least a third backing CIM has a higher merge precedence than both of the first backing CIM and the second backing CIM.

Method 400 also comprises an act 404 of exposing the merged filesystem namespace to a consumer. In some embodiments, act 404 comprises exposing the merged filesystem namespace, including the first filesystem object and the second filesystem object, to at least one filesystem consumer. In an example, the namespace presentation component 204 uses the merge metadata 106 (e.g., metadata item 309a, metadata item 309b', metadata item 309c', and metadata item 309d), together with data streams stored in CIMs 113 (e.g., data stream 308a, data stream 308b', data stream 308c', and data stream 308d), to expose the merged filesystem namespace to OS 107, or to one or more applications executing thereon.

In some embodiments, method 400 also comprises an act 405 of persisting the merged CIM metadata to a "dataless" merge CIM. In some embodiments, act 405 comprises persisting the merged metadata into a metadata-only merge CIM. In an example, the merged CIM persistence component 205 persists the merge metadata 105 (e.g., metadata item 309a, metadata item 309b', metadata item 309c', and metadata item 309d) to merge CIM 114a (e.g., merge CIM 302). Creation of a merge CIM provides a technical benefit of enabling a merged filesystem namespace to be mounted repeatedly without repeating method 400. Creation of a merge CIM provides a technical benefit of enabling enables a merged filesystem namespace to be shared with other guest contexts and/or computer systems (e.g., remote source 115).

As shown in Figure 4, there is no ordering specified between act 404 and act 405. As such, in various embodiments, act 404 and act 405 are performed in parallel, or serially (in either order).

Since the plurality of backing CIMs are independent, and each defines a distinct and independent filesystem namespace, in some embodiments the CIM manager 110 mounts and exposes one or more of their namespaces to filesystem consumers. Since, in embodiments, the generation of merge metadata 106 in act 403 does not modify the backing CIMs, the mounting of a backing CIM can occur prior, during, and/or after the any of the acts in method 400. For example, in some embodiments, method 400 also comprises (at any point in method 400) exposing the first independent filesystem namespace from the first backing CIM to the at least one filesystem consumer, and independently exposing the second independent filesystem namespace from the second backing CIM to the at least one filesystem consumer.

While method 400 has focused on a merge configuration 108 comprising CIM identities 111 and merge precedence 112, as mentioned the merge configuration 108 could include one or more other types of merge configuration information. As mentioned, in some embodiments, the merge configuration information includes one or more "tombstones," which are indications of one or more filesystem objects that should be excluded from a merged filesystem namespace. Thus, in some embodiments of method 400, the merge configuration information also includes a tombstone for a third filesystem object. In these embodiments, generating the merged metadata in act 403 also includes omitting a third merged metadata item that defines a third filesystem object as being part of the merged filesystem namespace. In embodiments, the third merged metadata item is omitted based at least on using the tombstone to determine that the third filesystem object not should be part of the merged filesystem namespace, even though the third filesystem object exists in at least one of the plurality of backing CIMs. Use of tombstones provides a technical benefit of enabling granular customization of the filesystem objects that appear in a merged filesystem namespace.

As mentioned, in some embodiments, the merge configuration information includes one or more include lists, which specify one or more filesystem objects that should appear in a merged filesystem namespace if those filesystem objects are present in one or more of CIMs. Thus, in some embodiments of method 400, the merge configuration information also includes an include list specifying the first filesystem object and the second filesystem object. In these embodiments, generating the merged metadata in act 403 also includes determining that the first merged metadata item should be generated based at least on the first filesystem object defined by the first of the plurality of backing CIMs matching the include list, and determining that the second merged metadata item should be generated based at least on the second filesystem object defined by the second of the plurality of backing CIMs matching the include list. Use of include lists provides a technical benefit of enabling granular customization of the filesystem objects that appear in a merged filesystem namespace.

As mentioned, in some embodiments, the merge configuration information includes one or more override rules that override a merge precedence. Thus, in some embodiments of method 400, the merge configuration information also includes a merge precedence order exception for a third filesystem object. In these embodiments, generating the merged metadata in act 403 also includes generating a third merged metadata item that defines a third filesystem object as being part of the merged filesystem namespace, the third merged metadata item being generated based at least on using the merge precedence order exception to determine that the third filesystem object should be part of the merged filesystem namespace, even though the third filesystem object has a conflict with one or more filesystem objects from one or more of the plurality of backing CIMs that are defined by the merge precedence order to have a higher merge precedence than a backing CIM defining the third filesystem object. Use of override rules provides a technical benefit of enabling granular customization of the filesystem objects that appear in a merged filesystem namespace.

As mentioned, in some embodiments, the merge configuration information includes one or more conditional rules that specify one or more attributes that should be applied to a filesystem object within the merged filesystem namespace, if that filesystem object is present in at least one backing CIM. Thus, in some embodiments of method 400, the merge configuration information also includes a conditional rule for a third filesystem object, the conditional rule defining an attribute for the third filesystem object. In these embodiments, generating the merged metadata in act 403 also includes, when the third filesystem object exists in at least one of the plurality of backing CIMs, generating a third merged metadata item that defines the third filesystem object as being part of the merged filesystem namespace and as having the attribute defined by the conditional rule. In some embodiments, the attribute defined by the conditional rule overrides an attribute defined by the at least one backing CIM. Use of conditional rules provides a technical benefit of enabling granular customization of attributes of filesystem objects that appear in a merged filesystem namespace.

Accordingly, embodiments described herein merge a plurality of CIMs into a merged filesystem namespace, while handling any namespace conflicts (e.g., conflicting file or directory paths) that arise during the merger. Doing so enables the deployment of multiple independent CIMs to a single guest context, while merging their independent filesystem namespaces. This enables situations where CIMs are "layered" on top of each other to produce a desired namespace-such as by merging a filesystem namespace for a base OS, a filesystem namespace comprising files for a language pack, and a filesystem namespace comprising files for an application into a single namespace for use by a guest context.

Although the subject matter has been described in language specific to structural features and/or methodological acts, it is to be understood that the subject matter defined in the appended claims is not necessarily limited to the described features or acts described above, or the order of the acts described above. Rather, the described features and acts are disclosed as example forms of implementing the claims.

Embodiments of the present invention may comprise or utilize a special-purpose or general-purpose computer system that includes computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general-purpose or special-purpose computer system. Computer-readable media that store computer-executable instructions and/or data structures are computer storage media. Computer-readable media that carry computer-executable instructions and/or data structures are transmission media. Thus, by way of example, and not limitation, embodiments of the invention can comprise at least two distinctly different kinds of computer-readable media: computer storage media and transmission media.

Computer storage media are physical storage media that store computer-executable instructions and/or data structures. Physical storage media include computer hardware, such as RAM, ROM, EEPROM, solid state drives ("SSDs"), flash memory, phase-change memory ("PCM"), optical disk storage, magnetic disk storage or other magnetic storage devices, or any other hardware storage device(s) which can be used to store program code in the form of computer-executable instructions or data structures, which can be accessed and executed by a general-purpose or special-purpose computer system to implement the disclosed functionality of the invention.

Transmission media can include a network and/or data links which can be used to carry program code in the form of computer-executable instructions or data structures, and which can be accessed by a general-purpose or special-purpose computer system. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer system, the computer system may view the connection as transmission media. Combinations of the above should also be included within the scope of computer-readable media.

Further, upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., a "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at one or more processors, cause a general-purpose computer system, special-purpose computer system, or special-purpose processing device to perform a certain function or group of functions. Computer-executable instructions may be, for example, binaries, intermediate format instructions such as assembly language, or even source code.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The invention may also be practiced in distributed system environments where local and remote computer systems, which are linked (either by hardwired data links, wireless data links, or by a combination of hardwired and wireless data links) through a network, both perform tasks. As such, in a distributed system environment, a computer system may include a plurality of constituent computer systems. In a distributed system environment, program modules may be located in both local and remote memory storage devices.

Those skilled in the art will also appreciate that the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources (e.g., networks, servers, storage, applications, and services). The definition of "cloud computing" is not limited to any of the other numerous advantages that can be obtained from such a model when properly deployed.

A cloud computing model can be composed of various characteristics, such as on-demand self-service, broad network access, resource pooling, rapid elasticity, measured service, and so forth. A cloud computing model may also come in the form of various service models such as, for example, Software as a Service ("SaaS"), Platform as a Service ("PaaS"), and Infrastructure as a Service ("IaaS"). The cloud computing model may also be deployed using different deployment models such as private cloud, community cloud, public cloud, hybrid cloud, and so forth.

Some embodiments, such as a cloud computing environment, may comprise a system that includes one or more hosts that are each capable of running one or more virtual machines. During operation, virtual machines emulate an operational computing system, supporting an operating system and perhaps one or more other applications as well. In some embodiments, each host includes a hypervisor that emulates virtual resources for the virtual machines using physical resources that are abstracted from view of the virtual machines. The hypervisor also provides proper isolation between the virtual machines. Thus, from the perspective of any given virtual machine, the hypervisor provides the illusion that the virtual machine is interfacing with a physical resource, even though the virtual machine only interfaces with the appearance (e.g., a virtual resource) of a physical resource. Examples of physical resources including processing capacity, memory, disk space, network bandwidth, media drives, and so forth.

The present invention may be embodied in other specific forms without departing from its essential characteristics. The described embodiments are to be considered in all respects only as illustrative and not restrictive. The scope of the invention is, therefore, indicated by the appended claims rather than by the foregoing description.

When introducing elements in the appended claims, the articles "a," "an," "the," and "said" are intended to mean there are one or more of the elements. The terms "comprising," "including," and "having" are intended to be inclusive and mean that there may be additional elements other than the listed elements.

## Claims

1. A method, implemented at a computer system (101) that includes a processor (102), for merging a plurality of composite images, CIMs, into a merged filesystem namespace, the method comprising:
accessing (401) merge configuration information (108), which includes at least:
an identity (111) of a plurality of backing CIMs (113, 301), each comprising at least,
(i) a metadata portion (303) defining an independent filesystem namespace, and
(ii) a data portion (304) comprising data for the independent filesystem namespace, wherein a filesystem namespace includes at least a hierarchy of folders and files, and
a merge precedence order (112) for the plurality of backing CIMs;
based on the merge configuration information, generating (403) merged metadata (106) from each metadata portion of the plurality of backing CIMs, the merged metadata defining a merged filesystem namespace (302) comprising two or more filesystem objects (308) from the plurality of backing CIMs, generating the merged metadata including generating at least,
a first merged metadata item (309) that defines a first filesystem object (308) as being part of the merged filesystem namespace, and in which (i) the first merged metadata item corresponds to a first metadata item (307) within a first metadata portion (303) of a first of the plurality of backing CIMs which defines the first filesystem object as being part of a first independent filesystem namespace, (ii) the first merged metadata item references at least a first data portion of the first backing CIM, and (iii) the first merged metadata item is generated based at least on the first filesystem object having no conflict with any filesystem object from any of the plurality of backing CIMs that are defined by the merge precedence order to have a higher merge precedence than the first backing CIM, and
a second merged metadata item (309) that defines a second filesystem object as being part of the merged filesystem namespace, and in which (i) the second merged metadata item corresponds to a second metadata item (307) within a second metadata portion (303) of a second of the plurality of backing CIMs which defines the second filesystem object (308) as being part of a second independent filesystem namespace, (ii) the second merged metadata item references at least a second data portion of the second backing CIM, and (iii) the second merged metadata item is generated based at least on the second filesystem object having no conflict with any filesystem object from any of the plurality of backing CIMs that are defined by the merge precedence order to have a higher merge precedence than the second backing CIM; and
exposing (404) the merged filesystem namespace, including the first filesystem object and the second filesystem object, to at least one filesystem consumer.

2. The method of claim 1, wherein,
the merge precedence order defines the first backing CIM as having a highest merge precedence; or
the merge precedence order defines the second backing CIM as having a highest merge precedence.

3. The method of claim 1, wherein,
the first merged metadata item is a reference to the first metadata item within the first metadata portion of the first backing CIM; or
the second merged metadata item is a reference to the second metadata item within the second metadata portion of the second backing CIM.

4. The method of claim 1, wherein,
the first merged metadata item is a copy of, or derivative of, the first metadata item; or
the second merged metadata item is a copy of, or derivative of, the second metadata item.

5. The method of claim 1, wherein,
the first filesystem object conflicts with at least one filesystem object from at least one of the plurality of backing CIMs that is defined by the merge precedence order to have a lower merge precedence than the first backing CIM; or
the second filesystem object conflicts with at least one filesystem object from at least one of the plurality of backing CIMs that is defined by the merge precedence order to have a lower merge precedence than the second backing CIM.

6. The method of claim 1, wherein,
the merge configuration information also includes a merge precedence order exception for a third filesystem object; and
generating the merged metadata also includes generating a third merged metadata item that defines a third filesystem object as being part of the merged filesystem namespace, the third merged metadata item being generated based at least on using the merge precedence order exception to determine that the third filesystem object should be part of the merged filesystem namespace, even though the third filesystem object has a conflict with one or more filesystem objects from one or more of the plurality of backing CIMs that are defined by the merge precedence order to have a higher merge precedence than a backing CIM defining the third filesystem object.

7. The method of claim 1, wherein,
the merge configuration information also includes a conditional rule for a third filesystem object, the conditional rule defining an attribute for the third filesystem object; and
generating the merged metadata also includes, when the third filesystem object exists in at least one of the plurality of backing CIMs, generating a third merged metadata item that defines the third filesystem object as being part of the merged filesystem namespace and as having the attribute defined by the conditional rule.

8. The method of claim 7, wherein the attribute defined by the conditional rule overrides an attribute defined by the at least one backing CIM.

9. The method of claim 1, wherein,
the merge configuration information also includes a tombstone for a third filesystem object; and
generating the merged metadata also includes omitting a third merged metadata item that defines a third filesystem object as being part of the merged filesystem namespace, the third merged metadata item being omitted based at least on using the tombstone to determine that the third filesystem object not should be part of the merged filesystem namespace, even though the third filesystem object exists in at least one of the plurality of backing CIMs.

10. The method of claim 1, further comprising persisting the merged metadata into a metadata-only merge CIM.

11. The method of claim 1, further comprising exposing the first independent filesystem namespace from the first backing CIM to the at least one filesystem consumer, and independently exposing the second independent filesystem namespace from the second backing CIM to the at least one filesystem consumer.

12. One or more computer-readable media storing thereon computer-executable instructions that, when carried out by a processor, cause the processor to perform the method of one of claims 1 to 11.

13. A system comprising means adapted to perform the method of one of claims 1 to 11.

## Patentansprüche

1. Verfahren, implementiert in einem Computersystem (101), das einen Prozessor (102) umfasst, um eine Vielzahl von Composite Images (CIMs) in einen zusammengeführten Dateisystem-Namensraum zusammenzuführen, wobei das Verfahren umfasst:
Zugreifen (401) auf Zusammenführungs-Konfigurationsinformationen (108), die wenigstens Folgendes umfassen:
eine Identität (111) einer Vielzahl von Unterstützungs-CIMs (113, 301), jeweils wenigstens umfassend
(i) einen Metadatenabschnitt (303) zum Definieren eines unabhängigen Dateisystem-Namensraum, und
(ii) einen Datenabschnitt (304), umfassend Daten für den unabhängigen Dateisystem-Namensraum,
wobei ein Dateisystem-Namensraum wenigstens eine Hierarchie von Ordnern und Dateien umfasst, und
eine Zusammführungs-Rangfolge (112) für die Vielzahl von Unterstützungs-CIMs;
Erzeugen (403) von zusammengeführten Metadaten (106) aus jedem Metadatenabschnitt der Vielzahl von Unterstützungs-CIMs basierend auf den Zusammenführungs-Konfigurationsinformationen, wobei die zusammengeführten Metadaten einen zusammengeführten Dateisystem-Namensraum (302) definieren, umfassend zwei oder mehr Dateisystemobjekte (308) aus der Vielzahl von Unterstützungs-CIMs, wobei das Erzeugen der zusammengeführten Metadaten wenigstens das Erzeugen umfasst von
einem ersten zusammengeführten Metadatenelement (309), das ein erstes Dateisystemobjekt (308) als Teil des zusammengeführten Dateisystem-Namensraums definiert, und in dem (i) das erste zusammengeführte Metadatenelement einem ersten Metadatenelement (307) innerhalb eines ersten Metadatenabschnitts (303) eines ersten der Vielzahl von Unterstützungs-CIMs entspricht, welches das erste Dateisystemobjekt als Teil eines ersten unabhängigen Dateisystem-Namensraums definiert, (ii) das erste zusammengeführte Metadatenelement wenigstens auf einen ersten Datenabschnitt des ersten Unterstützungs-CIM verweist, und (iii) das erste zusammengeführte Metadatenelement wenigstens basierend auf dem ersten Dateisystemobjekt erzeugt wird, das keinen Konflikt mit einem Dateisystemobjekt aus einem der Vielzahl von Unterstützungs-CIMs aufweist, die durch die Zusammenführungs-Rangfolge so definiert sind, dass sie eine höhere Zusammenführungs-Rangordnung als das erste Unterstützungs-CIM aufweisen, und
einem zweiten zusammengeführten Metadatenelement (309), das ein zweites Dateisystemobjekt als Teil des zusammengeführten Dateisystem-Namensraums definiert, entspricht, und in dem (i) das zweite zusammengeführte Metadatenelement einem zweiten Metadatenelement (307) innerhalb eines zweiten Metadatenabschnitts (303) eines zweiten der Vielzahl von Unterstützungs-CIMs entspricht, welches das zweite Dateisystemobjekt (308) als Teil eines zweiten unabhängigen Dateisystem-Namensraums definiert, (ii) das zweite zusammengeführte Metadatenelement wenigstens auf einen zweiten Datenabschnitt des zweiten Unterstützungs-CIM verweist, und (iii) das zweite zusammengeführte Metadatenelement wenigstens basierend auf dem zweiten Dateisystemobjekt erzeugt wird, das keinen Konflikt mit einem Dateisystemobjekt aus einem der Vielzahl von Unterstützungs-CIMs aufweist, die durch die Zusammenführungs-Rangfolge so definiert sind, dass sie eine höhere Zusammenführungs-Rangordnung als das zweite Unterstützungs-CIM aufweisen; und
Freigeben (404) des zusammengeführten Dateisystem-Namensraums, umfassend das erste Dateisystemobjekts und das zweite Dateisystemobjekt, für wenigstens einen Dateisystemverbraucher.

2. Verfahren nach Anspruch 1, wobei,
die Zusammenführungs-Rangfolge das erste Backing-CIM als dasjenige mit einer höchsten Zusammenführungs-Rangordnung definiert; oder
die Zusammenführungs-Rangfolge das zweite Unterstützungs-CIM als dasjenige mit einer höchsten Zusammenführungs-Rangordnung definiert.

3. Verfahren nach Anspruch 1, wobei,
das erste zusammengeführte Metadatenelement ein Verweis auf das erste Metadatenelement innerhalb des ersten Metadatenabschnitts des ersten Unterstützungs-CIM ist; oder
das zweite zusammengeführte Metadatenelement ein Verweis auf das zweite Metadatenelement innerhalb des zweiten Metadatenabschnitts des zweiten Unterstützungs-CIM ist.

4. Verfahren nach Anspruch 1, wobei,
das erste zusammengeführte Metadatenelement eine Kopie oder eine Ableitung des ersten Metadatenelements ist; oder das zweite zusammengeführte Metadatenelement eine Kopie oder eine Ableitung des zweiten Metadatenelements ist.

5. Verfahren nach Anspruch 1, wobei,
das erste Dateisystemobjekt mit wenigstens einem Dateisystemobjekt von wenigstens einer der Vielzahl von Unterstützungs-CIMs in Konflikt steht, der dadurch definiert ist, dass die Zusammenführungs-Rangfolge eine niedrigere Zusammenführungs-Rangordnung aufweist als das erste Unterstützungs-CIM; oder
das zweite Dateisystemobjekt mit wenigstens einem Dateisystemobjekt von wenigstens einer der Vielzahl von Unterstützungs-CIMs in Konflikt steht, der dadurch definiert ist, dass die Zusammenführungs-Rangfolge eine niedrigere Zusammenführungs-Rangordnung aufweist als das zweite Unterstützungs-CIM.

6. Verfahren nach Anspruch 1, wobei,
die Zusammenführungs-Konfigurationsinformationen ebenfalls eine Zusammenführungs-Rangfolgenausnahme für ein drittes Dateisystemobjekt umfassen; und
das Erzeugen der zusammengeführten Metadaten auch das Erzeugen eines dritten zusammengeführten Metadatenelements umfasst, das ein drittes Dateisystemobjekt als Teil des zusammengeführten Dateisystem-Namensraums definiert, wobei das dritte verschmolzene Metadatenelement wenigstens basierend auf der Verwendung der Zusammenführungs-Rangfolgenausnahme erzeugt wird, um zu bestimmen, dass das dritte Dateisystemobjekt Teil des zusammengeführten Dateisystem-Namensraums sein sollte, obwohl das dritte Dateisystemobjekt einen Konflikt mit einem oder mehreren Dateisystemobjekten von einem oder mehreren aus der Vielzahl von Unterstützungs-CIMs aufweist, die durch die Zusammenführungs-Rangfolge so definiert sind, dass sie eine höhere Zusammenführungs-Rangordnung aufweisen als ein Unterstützungs-CIM, welches das dritte Dateisystemobjekt definiert.

7. Verfahren nach Anspruch 1, wobei,
die Zusammenführungs-Konfigurationsinformationen ebenfalls eine bedingte Regel für ein drittes Dateisystemobjekt umfassen, wobei die bedingte Regel ein Attribut für das dritte Dateisystemobjekt definiert; und
das Erzeugen der zusammengeführten Metadaten ebenfalls das Erzeugen eines dritten zusammengeführten Metadatenelements, welches das dritte Dateisystemobjekt als Teil des zusammengeführten Dateisystem-Namensraums definiert und welches das durch die bedingte Regel definierte Attribut aufweist, wenn das dritte Dateisystemobjekt in wenigstens einem der mehreren Unterstützungs-CIMs vorhanden ist.

8. Verfahren nach Anspruch 7, wobei das durch die bedingte Regel definierte Attribut ein durch das wenigstens eine Unterstützungs-CIM definiertes Attribut außer Kraft setzt.

9. Verfahren nach Anspruch 1, wobei,
die Zusammenführungs-Konfigurationsinformationen auch einen Tombstone für ein drittes Dateisystemobjekt umfassen; und
das Erzeugen der zusammengeführten Metadaten auch das Weglassen eines dritten zusammengeführten Metadatenelements umfasst, das ein drittes Dateisystemobjekt als Teil des zusammengeführten Dateisystem-Namensraums definiert, wobei das dritte zusammengeführte Metadatenelement wenigstens basierend auf der Verwendung des Tombstones weggelassen wird, um zu bestimmen, dass das dritte Dateisystemobjekt nicht Teil des zusammengeführten Dateisystem-Namensraums sein sollte, obwohl das dritte Dateisystemobjekt in wenigstens einem der Vielzahl von Unterstützungs-CIMs vorhanden ist.

10. Verfahren nach Anspruch 1, das ferner das Bestehenbleiben der zusammengeführten Metadaten in einem Nur-Metadaten-Zusammenführungs-CIM umfasst.

11. Verfahren nach Anspruch 1, ferner umfassend das Freigeben des ersten unabhängigen Dateisystem-Namensraums vom ersten Unterstützungs-CIM für den wenigstens einen Dateisystemverbraucher und das unabhängige Freigeben des zweiten unabhängigen Dateisystem-Namensraums vom zweiten Unterstützungs-CIM für den wenigstens einen Dateisystemverbraucher.

12. Ein oder mehrere computerlesbare Medien zum Speichern von computerausführbaren Anweisungen auf diesem, die, wenn von einem Prozessor ausgeführt, den Prozessor zum Ausführen des Verfahrens nach einem der Ansprüche 1 bis 11 veranlassen.

13. System, umfassend Mittel, die zum Ausführen des Verfahrens nach einem der Ansprüche 1 bis 11 angepasst sind.

## Revendications

1. Procédé, mis en œuvre au niveau d'un système informatique (101) qui comprend un processeur (102), permettant de fusionner une pluralité d'images composites, CIM, dans un espace de noms de système de fichiers fusionné, le procédé comprenant :
l'accès (401) à des informations de configuration de fusion (108), qui comprennent au moins :
une identité (111) d'une pluralité de CIM de sauvegarde (113, 301), chacune comprenant au moins,
(i) une partie de métadonnées (303) définissant un espace de noms de système de fichiers indépendant, et
(ii) une partie de données (304) comprenant des données pour l'espace de noms de système de fichiers indépendant, où un espace de noms de système de fichiers comprend au moins une hiérarchie de dossiers et de fichiers, et
un ordre de priorité de fusion (112) pour la pluralité de CIM de sauvegarde ;
sur la base des informations de configuration de fusion, la génération (403) de métadonnées fusionnées (106) à partir de chaque partie de métadonnées de la pluralité de CIM de sauvegarde, les métadonnées fusionnées définissant un espace de noms de système de fichiers fusionné (302) comprenant deux objets de système de fichiers (308) ou plus de la pluralité de CIM de sauvegarde, la génération des métadonnées fusionnées comprenant au moins la génération d'au moins,
un premier élément de métadonnées fusionnées (309) qui définit un premier objet de système de fichiers (308) comme faisant partie de l'espace de noms de système de fichiers fusionné, et dans lequel (i) le premier élément de métadonnées fusionnées correspond à un premier élément de métadonnées (307) dans une première partie de métadonnées (303) d'une première CIM de la pluralité de CIM de sauvegarde qui définit le premier objet de système de fichiers comme faisant partie d'un premier espace de noms de système de fichiers indépendant, (ii) le premier élément de métadonnées fusionnées fait référence à au moins une première partie de données de la première CIM de sauvegarde, et (iii) le premier élément de métadonnées fusionnées est généré au moins sur la base du fait que le premier objet de système de fichiers n'est en conflit avec aucun objet de système de fichiers issu de la pluralité de CIM de sauvegarde qui sont définies par l'ordre de priorité de fusion comme ayant une priorité de fusion supérieure à celle de la première CIM de sauvegarde, et
un deuxième élément de métadonnées fusionnées (309) qui définit un deuxième objet de système de fichiers comme faisant partie de l'espace de noms de système de fichiers fusionné et dans lequel (i) le deuxième élément de métadonnées fusionnées correspond à un deuxième élément de métadonnées (307) dans une deuxième partie de métadonnées (303) d'une deuxième CIM de la pluralité de CIM de sauvegarde qui définit le deuxième objet de système de fichiers (308) comme faisant partie d'un deuxième espace de noms de système de fichiers indépendant, (ii) le deuxième élément de métadonnées fusionnées fait référence à au moins une deuxième partie de données de la deuxième CIM de sauvegarde, et (iii) le deuxième élément de métadonnées fusionnées est généré au moins sur la base du fait que le deuxième objet de système de fichiers n'est en conflit avec aucun objet de système de fichiers issu d'une CIM quelconque de la pluralité de CIM de sauvegarde qui sont définies par l'ordre de priorité de fusion comme ayant une priorité de fusion supérieure à celle de la deuxième CIM de sauvegarde ; et
l'exposition (404) de l'espace de noms de système de fichiers fusionné, incluant le premier objet de système de fichiers et le deuxième objet de système de fichiers, à au moins un consommateur de système de fichiers.

2. Procédé de la revendication 1, dans lequel,
l'ordre de priorité de fusion définit la première CIM de sauvegarde comme ayant la priorité de fusion la plus élevée ; ou
l'ordre de priorité de fusion définit le deuxième CIM de sauvegarde comme ayant la priorité de fusion la plus élevée.

3. Procédé de la revendication 1, dans lequel,
le premier élément de métadonnées fusionnées est une référence au premier élément de métadonnées dans la première partie de métadonnées de la première CIM de sauvegarde ; ou
le deuxième élément de métadonnées fusionnées est une référence au deuxième élément de métadonnées dans la deuxième partie de métadonnées de la deuxième CIM de sauvegarde.

4. Procédé de la revendication 1, dans lequel,
le premier élément de métadonnées fusionnées est une copie ou un dérivé du premier élément de métadonnées ; ou
le deuxième élément de métadonnées fusionnées est une copie ou un dérivé du deuxième élément de métadonnées.

5. Procédé de la revendication 1, dans lequel,
le premier objet de système de fichiers est en conflit avec au moins un objet de système de fichiers issu d'au moins une CIM de la pluralité de CIM de sauvegarde qui est définie par l'ordre de priorité de fusion comme ayant une priorité de fusion inférieure à celle de la première CIM de sauvegarde ; ou
le deuxième objet de système de fichiers est en conflit avec au moins un objet de système de fichiers issu d'au moins une CIM de la pluralité de CIM sauvegarde qui est définie par l'ordre de priorité de fusion comme ayant une priorité de fusion inférieure à celle de la deuxième CIM de sauvegarde.

6. Procédé de la revendication 1, dans lequel,
les informations de configuration de fusion comprennent également une exception d'ordre de priorité de fusion pour un troisième objet de système de fichiers ; et
la génération des métadonnées fusionnées comprend également la génération d'un troisième élément de métadonnées fusionnées qui définit un troisième objet de système de fichiers comme faisant partie de l'espace de noms de système de fichiers fusionné, le troisième élément de métadonnées fusionnées étant généré au moins sur la base de l'utilisation de l'exception d'ordre de priorité de fusion pour déterminer que le troisième objet de système de fichiers doit faire partie de l'espace de noms de système de fichiers fusionné, même si le troisième objet de système de fichiers est en conflit avec un ou plusieurs objets de système de fichiers issus d'une ou plusieurs CIM de la pluralité de CIM de sauvegarde qui sont définies par l'ordre de priorité de fusion comme ayant une priorité de fusion supérieure à celle d'une CIM de sauvegarde définissant le troisième objet de système de fichiers.

7. Procédé de la revendication 1, dans lequel
les informations de configuration de fusion comprennent également une règle conditionnelle pour un troisième objet de système de fichiers, la règle conditionnelle définissant un attribut pour le troisième objet de système de fichiers ; et
la génération des métadonnées fusionnées comprend également, lorsque le troisième objet de système de fichiers existe dans au moins l'une de la pluralité de CIM de sauvegarde, la génération d'un troisième élément de métadonnées fusionnées qui définit le troisième objet de système de fichiers comme faisant partie de l'espace de noms de système de fichiers fusionné et comme ayant l'attribut défini par la règle conditionnelle.

8. Procédé de la revendication 7, dans lequel l'attribut défini par la règle conditionnelle remplace un attribut défini par l'au moins une CIM de sauvegarde.

9. Procédé de la revendication 1, dans lequel
les informations de configuration de fusion comprennent également une désactivation pour un troisième objet de système de fichiers ; et
la génération des métadonnées fusionnées comprend également l'omission d'un troisième élément de métadonnées fusionnées qui définit un troisième objet de système de fichiers comme faisant partie de l'espace de noms de système de fichiers fusionné, le troisième élément de métadonnées fusionnées étant omis au moins sur la base de l'utilisation de la désactivation pour déterminer que le troisième objet de système de fichiers ne doit pas faire partie de l'espace de noms de système de fichiers fusionné, même si le troisième objet de système de fichiers existe dans au moins l'une de la pluralité de CIM de sauvegarde.

10. Procédé de la revendication 1, comprenant en outre la persistance des métadonnées fusionnées dans une CIM de fusion contenant uniquement des métadonnées.

11. Procédé de la revendication 1, comprenant en outre l'exposition du premier espace de noms de système de fichiers indépendant issu de la première CIM de sauvegarde à l'au moins un consommateur de système de fichiers, et l'exposition indépendante du deuxième espace de noms de système de fichiers indépendant issu de la deuxième CIM de sauvegarde à l'au moins un consommateur de système de fichiers.

12. Un ou plusieurs supports lisibles par ordinateur stockant des instructions exécutables par ordinateur qui, lorsqu'elles sont mises en œuvre par un processeur, amènent le processeur à effectuer le procédé de l'une des revendications 1 à 11.

13. Système comprenant des moyens adaptés pour effectuer le procédé de l'une des revendications 1 à 11.
